Europäisches Patentamt

European Patent Office

Office européen des brevets

(11) Publication number: **0 370 690**
**A2**

## EUROPEAN PATENT APPLICATION

(21) Application number: **89311842.2**

(22) Date of filing: **15.11.89**

(51) Int. Cl.⁵: **G11B 23/03, G11B 33/04, G11B 33/14**

(30) Priority: **22.11.88 GB 8827223**

(43) Date of publication of application:
**30.05.90 Bulletin 90/22**

(84) Designated Contracting States:
**AT BE CH DE ES FR GB GR IT LI LU NL SE**

(71) Applicant: **Lam, Philip Yung Tak**
**P.O. Box 96259, T.S.T. Room 1107 Hang Shing**
**Building 363-373 Nathan Road**
**Kowloon(HK)**

(72) Inventor: **Lam, Philip Yung Tak**
**P.O. Box 96259, T.S.T. Room 1107 Hang Shing**
**Building 363-373 Nathan Road**
**Kowloon(HK)**

(74) Representative: **Price, Paul Anthony King et al**
**D. Young & Co. 10 Staple Inn**
**London WC1V 7RD(GB)**

(54) **A video and/or audio cassette assembly.**

(57) A video and/or audio cassette assembly of the
invention includes a rotatable recording disc (1) for
recording and/or playback of visual and/or audio
information, and a container (2, 3, 13, 15, 29, 30) for
housing and protecting said disc (1) against damage
or dust. The container is provided with apertures (4,
4a, 18, 18a) for affording access to a recording
surface of the disc (1) for at least one write/read
head of a recording and/or playback unit, and with
apertures (5, 19) for affording access to the disc for
drive means of a recording and/or playback unit for
rotating the disc (1). Projections/plugs (35, 36, 37)
are provided for sealing the apertures (4, 4a, 18,
18a, 5, 19) when the container is closed.

FIG. 2

# A VIDEO AND/OR AUDIO CASSETTE ASSEMBLY

This invention relates to a video and/or audio cassette assembly and particularly, but not exclusively, concerns such an assembly capable of use with a computer or a video/audio recording and/or playback unit for recording visual and/or audio information for subsequent playback, such as a message or greeting.

Whilst video and/or audio recording cassette assemblies are known which contain a magnetic material coated tape as the recording medium, these assemblies are not completely satisfactory due to the relative ease with which a tape of this plastics material coated with a magnetic recording material can be damaged or broken, become stretched with consequent distortion of the recorded information thereon or become dirty with further distortion of the message recorded thereon. Such known assemblies utilising a recording tape in a plastics container also allow the ingress of damaging dust and dirt to the recording tape by the presence in the container of many openings into the tape containing compartment therein which are necessary for the tape drives and insertion of the tape write/read heads.

There is accordingly a need for a generally improved video and/or audio cassette assembly which is of stronger construction and which contains a more durable and hence longer lasting recording medium than the aforesaid plastics recording tapes. Preferably such an improved cassette assembly should also provide means of more reliably preventing ingress of detrimental dirt or dust.

According to one aspect of the present invention there is provided a video and/or audio cassette assembly, including a rotatable recording disc for recording and/or playback of visual and/or audio information, and a container for housing and protecting said disc against damage or dust; the container being made from rigid or semi-rigid sheet material and including a two part, inner housing within which the disc can rotate; the two parts forming the inner housing each having an end surface and an outer peripheral rim extending substantially perpendicularly therefrom; the end surfaces being apertured to provide two openings into the inner housing for affording access to both sides of the disc for one or more write/read heads of a recording and/or playback unit, and one of the end surfaces being apertured substantially at the centre thereof to provide an aperture for affording access to the disc for drive means of a recording and/or playback unit for rotating the disc; the container further including a two part intermediate housing surrounding the inner housing, which intermediate housing is made out of rigid or semi-rigid sheet material and provided with three apertures corresponding in position to the two openings and aperture into the inner housing, and an outer housing connected to the intermediate housing so as to form two pivotable covers for releaseably enclosing the intermediate housing; one of the two covers being provided with an inner projection and an inner plug for sealing off, when closed over the intermediate housing, two of the apertures of the intermediate housing, and the other of the two covers being provided with an inner projection for sealing off, when closed over the intermediate housing, the third aperture of the intermediate housing; and the inner plug having a large diameter portion with an annular surface for engaging the outer surface of a centre drive boss of the disc, when the covers are closed, and an elongate smaller diameter portion for projecting into the centre drive boss, to locate the disc in the inner housing against movement relative thereto.

Preferably, the inner housing is substantially cylindrical and drum-like in form.

Preferably, the edge of each said peripheral rim is turned over so that the turned over rim edges of the two parts of the inner housing are inter-engageable in the manner of a clip to clip the two parts together in a substantially dust-tight sealing fashion.

Conveniently the inner housing includes a pair of spring fingers extending each from a respective one of the end surfaces to grip the disc therebetween via intermediate sealing membranes located one on each inner surface of the two end surfaces, to steady the disc.

Preferably the inner housing includes a drum projecting inwardly substantially from the centre of the inner face of the end surface which has only the single opening, which drum provides a locating spigot for the drive shaft of a recording and/or playback unit when projecting into the inner housing through the aperture therein and into engagement with the centre drive boss of the disc.

Preferably the intermediate housing is substantially rectangular in plan.

Conveniently the inner housing is provided on its rim with four diametrically extending legs which engage at their tips against the inner walls and/or corners of the intermediate housing to locate the inner housing securely in the intermediate housing.

Preferably the assembly includes a tongue projecting inwardly from an end wall of the intermediate housing for locating in a slot or recess through or in the rim of the inner housing, to locate the inner housing fixedly in the intermediate housing.

Advantageously the intermediate housing includes at one corner thereof a write protection hole and at another corner thereof a drive identification hole, with the write protection hole being provided with a spring loaded cover flap displaceable by engagement with part of the correct recording and/or playback unit.

Conveniently the intermediate housing includes a plurality of recesses for accomodating locating pins of the drive means of the correct recording and/or playback unit.

Preferably the outer housing is made in two parts of rigid or semi-rigid sheet material. Preferably the outer housing is substantially rectangular in plan.

Preferably the disc has a coating of magnetic iron oxide.

Conveniently the disc carries a video and/or audio greeting.

For a better understanding of the present invention and to, show how the same may be carried in to effect, reference will now be made, by way of example, to the accompanying drawings, in which:

Figure 1 is a plan view from above of a video and/or audio cassette assembly according to a first embodiment of the invention, in an open position,

Figure 2 is a longitudinal cross-sectional view taken on the line A-A of Figure 1,

Figure 3 is a sectional view of a detail of the assembly of Figures 1 and 2 taken on the line B-B in Figure 1,

Figure 4 is a sectional view of part of the assembly of Figures 1 and 2 taken on the line C-C of Figure 1,

Figure 5 is a sectional view of the assembly of Figures 1 to 4 taken on the line D-D of Figure 1,

Figure 6 is a diagramatical view from above of the detail of Figure 5, in a closed position,

Figure 7 is a view similar to that of Figure 6 but in an open position,

Figure 8 is a part cross-sectional view taken on the line E-E of Figure 1,

Figure 9 is a view from above of the assembly of Figures 1 to 8 in a closed position,

Figure 10 is a view from one end of the closed assembly of Figure 9, and

Figure 11 is a cross-sectional view through Figure 9 taken on the line F-F of Figure 9.

A video and/or audio cassette assembly according to one embodiment of the invention as shown in the accompanying drawings basically includes a rotatable recording disc 1 for recording and/or playback of visual and/or audio information, and a container for housing and protecting the disc 1 against damage or dust. The disc 1 can be made of any suitable material such as semi-stiff plastics material and may carry on one or both faces thereof material on which can be recorded the required visual and/or audio information. Preferably this material is a coating of magnetic iron oxide.

The container for housing and protecting the disc 1 is provided with apertures for affording access to a recording surface of the disc for at least one write/read head of a recording and/or playback unit, and with at least one aperture for affording access to the disc for drive means of a recording and/or playback unit for rotating the disc. As illustrated the container is made from rigid or semi-rigid sheet material, preferably plastics, and includes a two-part substantially cylindrical, drum-like inner housing in which the disc 1 is rotatably housable. Thus the inner housing has a first part 2 and a second part 3. The first part 2 has a substantially circular top end surface 2a and an outer peripheral rim 2b extending substantially perpendicularly therefrom. The inner housing second part 3 similarly has a substantially circular bottom end surface 3a and an outer peripheral rim 3b extending substantially perpendicularly therefrom. The edge of each rim 2b and 3b is turned over so that the turned over rim edges of the two parts 2 and 3 of the inner housing are inter-engageable in the manner of a clip as shown in Figures 2 and 11 to clip the two parts 2 and 3 together in a substantially dust-tight sealing fashion. Alternatively the inner housing parts can have any suitable shape other than cylindrical and be secured together at their edges in any convenient manner.

The circular top surface 2a and circular bottom surface 3a are each apertured to provide two openings 4 and 4a through the inner housing for affording access to both sides of the disc 1 for one or more write/read heads of a recording and/or playback unit. Additionally the top substantially circular surface 2a is apertured substantially at the centre thereof to provide an aperture 5 in the inner housing for affording access to the disc 1 for drive means of a recording and/or playback unit for rotating the disc 1.

The inner housing also includes a pair of spring fingers 6 which extend each from a respective one of the substantially circular top and bottom surfaces 2a and 3a to grip the disc therebetween via intermediate sealing membranes 7 located one on each inner surface of the top and bottom substantially circular surfaces 2a and 3a to steady the disc 1. The membranes 7 made be made of any convenient material and attached to the inner housing parts 2 and 3 in any convenient manner so as to provide a protective guard for the recording/playback surface of the disc 1. Conveniently the spring fingers 6 are secured through the membrane 7 to the inner housing parts 2 and 3 as illustrated in Figures 2 and 11 of the accompanying drawings and function to steady and support the disc 1 during rotation thereof which in turn allows the write/read heads writing/reading on the recording/playback surfaces of the disc 1 to operate more effectively.

The inner housing additionally includes a hollow open ended drum 8 projecting inwardly and upwardly substantially from the centre of the inner or upper face of the bottom substantially circular surface 3a. This drum provides a locating spigot for the drive shaft (not shown) of a recording and/or playback unit when projecting into the inner housing through the aperture 5 and into engagement with a centre drive boss 9 of the disc 1. The centre drive boss 9 is secured in any convenient manner to the disc 1 such as by means of a ring of adhesive material 10. The centre drive boss 9 has a centre opening 11 therethrough to receive the drive shaft of the recording and/or playback unit and has a recess or slot 12 in the upper surface thereof for receiving a locating finger (not shown) on the drive shaft or drive means of the recording and/or playback unit. This engagement between the finger and recess or slot 12 ensures prevention of slip between the drive shaft of the recording and/or playback unit and the centre drive boss 9 and thus the disc 1.

The container also includes a two-part intermediate housing surrounding the inner housing. This intermediate housing may have any convenient shape but preferably is substantially rectangular in plan, made out of rigid or semi-rigid sheet material, preferably plastics, and provided with three apertures corresponding in position to the two openings 4 and 4a and the aperture 5 through the inner housing. As illustrated the intermediate housing includes a first part having a substantially rectangular top surface 13 bounded by a depending rim 14 projecting substantially perpendicularly therefrom. The second part of the intermediate housing comprises a substantially rectangular bottom surface 15 again bounded by an upstanding rim 16 which extends substantially vertically therefrom. Conveniently as illustrated the rim 16 only extends on three sides of the bottom surface 15 and on these three sides the rim surrounds and is sealed to the rim 14 of the top surface 13 in any convenient manner, such as by heat welding or adhesive. On the remaining side the bottom surface 15 extends in the same plane and is secured to a parallel portion 17 extending horizontally from one side of the rim 14 of the top surface 13 as shown in Figures 2 and 11. The parallel portion 17 is secured to the extended portion of the bottom surface 15 again in any convenient manner such as by heat welding or adhesive. In this way the intermediate housing forms a further sealed container part around the inner housing and disc 1. A write/read opening 18 is formed through the intermediate housing top surface 13 in alignment with the write/read opening 4 and an aperture 19 for the drive shaft to the disc 1 is formed through the intermediate housing top surface 13 in alignment with the aperture 5. Similarly a write/read opening 18a is formed through the bottom surface 15 of the intermediate housing in alignment with the opening 4a in the inner housing.

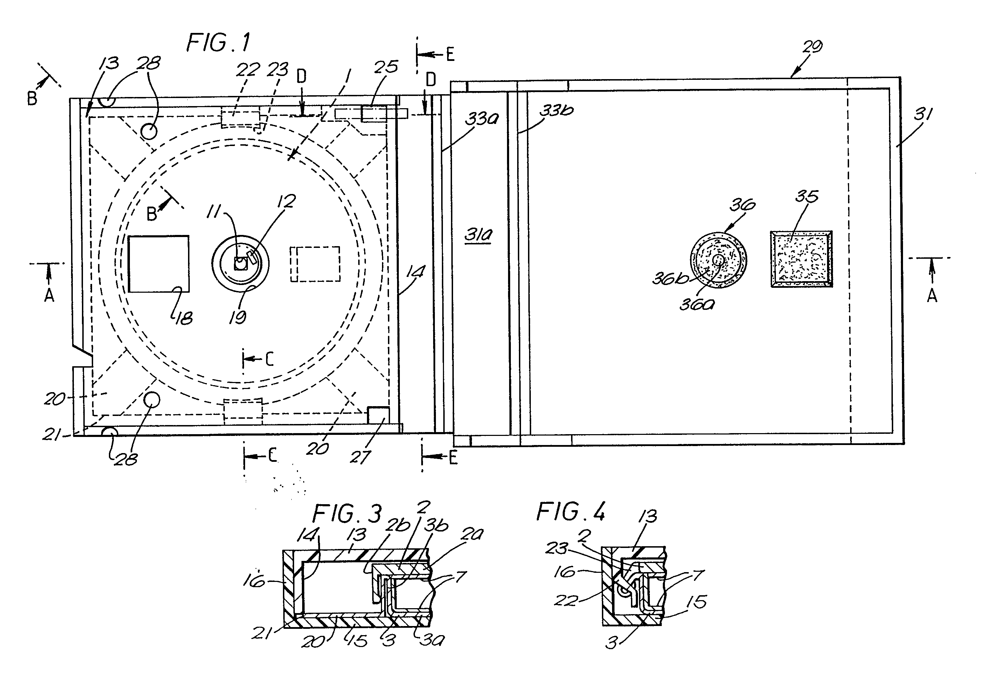

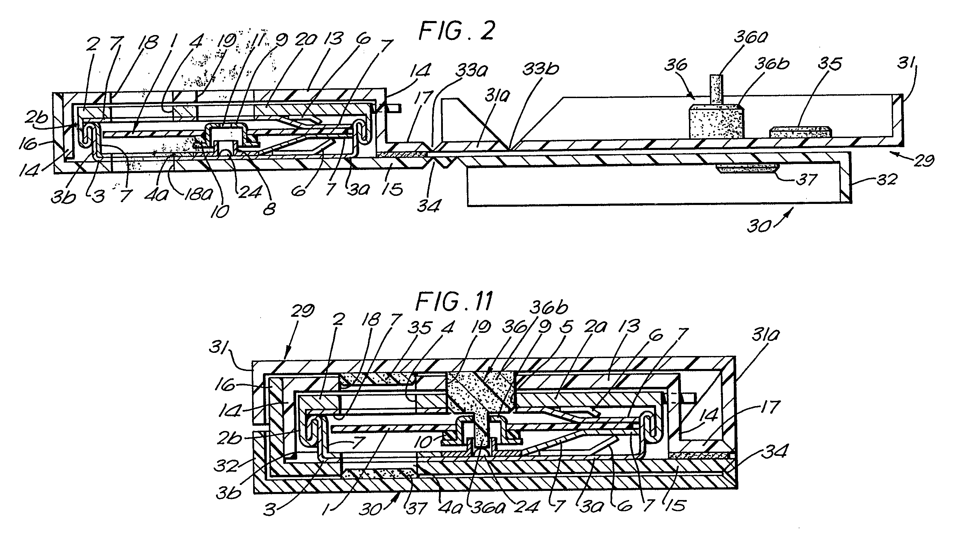

To assist in locating accurately and firmly the substantially circular inner housing within the substantially rectangular intermediate housing the inner housing is provided on its bottom part outer rim 3b with four diametrically extending legs 20 which engage at their tips 21 against the inner walls and/or corner of the rim 14 of the intermediate housing as can be seen more clearly from Figures 1 and 3. The legs 20 thus prevent rotation of the inner housing within the intermediate housing.

The intermediate housing additionally includes a tongue 22 which projects inwardly from an end wall or rim 14 for location in a slot or recess 23 through or in the outer rim 2b of the inner housing first part 2, to locate the inner housing fixedly in the intermediate housing.

The drum 8 in the inner housing additionally may have, in its open bore where this bore meets the inner face of the bottom surface 3a, a centre bearing or plate 24 made of a resilient material to cushion the end of the drive shaft of the recording and/or playback unit when projecting through the centre drive boss 9 and into the drum 8. This assists the effective loading of the assembly into the recording and/or playback unit and improves the operation of the drive shaft of the unit.

The intermediate housing also includes at one corner thereof a write protection hole 25 which is provided with a spring loaded cover flap 26 which is pivotally or longitudinally displaceable by engagement with part of the correct recorder and/or playback unit to uncover the hole 25 for entrance of a pin on the unit. Additionally at another corner thereof the intermediate housing has a drive identification hole 27 to receive a pin of the correct drive unit. The holes 25 and 27 are provided and so located to ensure that only the correct compatible computer and/or recorder and/or playback unit can be utilised to record information on and playback information from the disc 1. Two pairs of recesses 28 (see Figure 1) are provided in the top surface 13 of the intermediate housing and in the rim 16 of the intermediate housing for accomodating locating pins of the drive means of the correct computer and/or recorder and/or playback unit. These recesses again ensure correct location and proper engagement with the drives in the computer or unit.

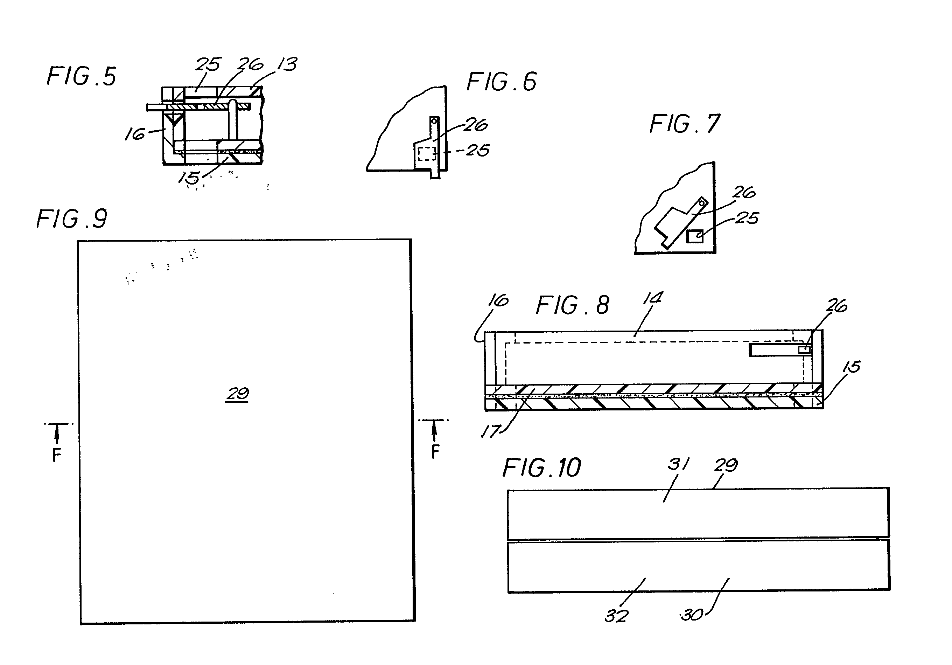

The container also includes a two part outer housing which can have any convenient shape but preferably is substantially rectangular and made of rigid or semi-rigid sheet material, such as plastics, for enclosing the intermediate housing and for closing off the apertures 5 and 19 and openings 4, 4a, 18 and 18a to ingress of dust. As can be seen more clearly from Figures 1, 2, 9, 10 and 11 the outer housing is hingedly connected to the intermediate housing so as to form an upper cover 29 and a lower cover 30 for the intermediate housing. As can be seen more clearly from Figures 1, 2 and 11 the upper cover 29 has a generally rectangular surface bounded by a substantially perpendicular rim 31 and the lower cover 30 again is substantially rectangular and is bounded by a substantially perpendicularly extending rim 32. The upper cover 29 is hingedly connected at 33a and 33b to the parallel portion 17 of the intermediate housing first part rim 14. This is conveniently done by means of score lines in the material of the cover 29 as illustrated in Figures 1 and 2. Theses score lines or hinge connections 33a and 33b are spaced from one another sufficiently to provide a rim portion 31a for the upper cover 29 as can be seen from Figures 1 and 2 where the cover 29 is in the open position and Figure 11 in which the cover 29 is in the closed position. Similarly the lower cover 30 is provided with a hinge connection or score line 34 in the extended portion of the bottom surface of the second part 15 of the intermediate housing so as to permit the lower cover 30 to hinge about the hinge connection or score line 34 so that it lies substantially parallel to the bottom surface 15 of the second part of the intermediate housing as can be seen in Figure 11.

The upper cover 29 is provided with an inner projection 35 and an inner plug 36 for sealing off, respectively, the write/read openings 4 and 18 and the drive apertures 5 and 19 in the inner and intermediate housings when the cover is in the closed position as shown in Figure 11. Similarly the lower cover 30 is provided with an inner projection 37 for sealing off, when the lower cover 30 is closed over the inner housing, the write/read openings 4a and 18a as can be seen particularly from Figure 11. In this way ingress of dirt to the disc 1 is prevented effectively when the covers are in the closed position over the intermediate housing. Preferably as illustrated the inner plug 36 has two parts namely a large diameter portion for engaging firmly in the apertures 5 and 19 and an elongate smaller diameter portion 36a for projecting through the centre opening 11 in the disc 1 and into the drum 8. The inner projections 35 and 37 and the inner plug 36 are dimensioned to fit closely in their respective associated openings or apertures both for sealing purposes and for providing a measure of clipping action to hold the covers more securely in the closed position. To this end the inner projections 35 and 37 and the inner plug 36 conveniently are made of a resilient material. Additionally the inner plug is dimensioned such that, in the closed position of the assembly as shown in Figure 11, an annular surface 36b engages the upper or outer surface of the centre drive boss 9, and its smaller diameter portion 36a engages closely in the centre opening 11 of the disc not only for the purpose of sealing against ingress of dirt to the disc 1 but also to locate the latter more positively in the inner housing and prevent the disc from contacting the inner housing walls.

The video and/or audio cassette assembly of the invention may be used with any convenient computer or recording and/or playback unit to record and/or playback any video and/or audio material desired. For example the assembly may be used for the recording of birthday greetings and a sleeve may be inserted into the intermediate housing or outer housing for identification of the material on the disc 1.

## Claims

1. A video and/or audio cassette assembly, including a rotatable recording disc (1) for recording and/or playback of visual and/or audio information, and a container (2,3,13,15,29,30) for housing and protecting said disc (1) against damage or dust; the container (2,3,13,15,29,30) being made from rigid or semi-rigid sheet material and including a two part, inner housing (2,3) within which the disc (1) can rotate; the two parts (2,3) forming the inner housing each having an end surface (2a,3a) and an outer peripheral rim (2b,3b) extending substantially perpendicularly therefrom; the end surfaces (2a,3a) being apertured to provide two openings (4,4a) into the inner housing for affording access to both sides of the disc (1) for one or more write/read heads of a recording and/or playback unit, and one of the end surfaces (2a) being apertured substantially at the centre thereof to provide an aperture (5) for affording access to the disc for drive means of a recording and/or playback unit for rotating the disc; the container (2,3,13,15,29,30) further including a two part intermediate housing (13,14,15,16) surrounding the inner housing (2,3), which intermediate housing is made out of rigid or semi-rigid sheet material and provided with three apertures (18,18a,19) corresponding in position to the two openings (4,4a) and aperture (5) into the inner housing, and an outer housing (29,30) connected to the intermediate housing (13,14,15,16) so as to form two pivotable covers (29,30) for releaseably enclosing the intermediate housing; one of the two covers (29) being provided with an inner projection (35) and an inner plug (36) for sealing off, when closed over the intermediate housing (13,14,15,16), two of the apertures (18,19) of the intermediate housing, and the other of the two covers (30) being provided with an inner projection (37) for sealing off, when closed over the intermediate housing (13,14,15,16), the third aperture (18a) of the intermediate housing; and the inner plug (36) having a large diameter portion with an annular surface (36b) for engaging the outer surface of a centre drive boss (9) of the disc (1), when the covers (29,30) are closed, and an elongate smaller diameter portion (36a) for projecting into the centre drive boss (9), to locate the disc (1) in the inner housing (2,3) against movement relative thereto.

2. An assembly according to Claim 1, wherein the inner housing (2,3) is substantially cylindrical and drum-like in form.

3. An assembly according to Claim 1 or 2, wherein the inner housing (2,3) includes a pair of spring fingers (6) extending each from a respective one of the end surfaces (2a,3a) to grip the disc (1) between intermediate sealing membranes (7) located one on each inner surface of the two end surfaces (2a,3a), to steady the disc (1).

4. An assembly according to Claim 3, wherein the inner housing (2,3) includes a drum (8) projecting inwardly substantially from the centre of the inner face of the end surface (3a) which has only the single opening (4a), which drum (8) provides a locating spigot for the drive shaft of a recording and/or playback unit when projecting into the inner housing through the aperture (5) therein and into engagement with the centre drive boss (9) of the disc (1).

5. An assembly according to any preceding claim, wherein the intermediate housing (13,14,15,16) is substantially rectangular in plan.

6. An assembly according to any preceding claim, wherein the inner housing (2,3) is provided on its rim (2b,3b) with four diametrically extending legs (20) which engage at their tips (21) against the inner walls and/or corners of the intermediate housing (13,14,15,16) to locate the inner housing (2,3) securely in the intermediate housing.

7. An assembly according to Claim 5 or 6, including a tongue (22) projecting inwardly from an end wall (14) of the intermediate housing (13,14,15,16) for locating in a slot or recess (23) through or in the rim (2b) of the inner housing (2,3), to locate the inner housing fixedly in the intermediate housing.

8. An assembly according to any preceding claim, wherein the intermediate housing (13,14,15,16) includes at one corner thereof a write protection hole (25) and at another corner thereof a drive identification hole (27), with the write protection hole (25) being provided with a spring loaded cover flap (26) displaceable by engagement with part of the correct recording and/or playback unit.

9. An assembly according to any preceding claim, wherein the intermediate housing includes (13,14,15,16) a plurality of recesses (28) for accomodating locating pins of the drive means of the correct recording and/or playback unit.

10. An assembly according to any preceding claim, in which the outer housing (29,30) is made in two parts of rigid or semi-rigid sheet material.

11. An assembly according to Claim 10, wherein the outer housing (29,30) is substantially rectangular in plan.

12. An assembly according to any preceding claim, wherein the disc (1) has a coating of magnetic iron oxide.

13. An assembly according to any preceding claim, wherein the disc (1) carries a video and/or audio greeting.

14. An assembly according to Claim 1 or 2, in which the edge of each said peripheral rim (2b,3b) is turned over so that the turned over rim edges of the two parts of the inner housing (2,3) are interengagable in the manner of a clip to clip the two parts together in a substantially dust-tight sealing fashion.

FIG.1

FIG.3

FIG.4

EP 0 370 690 A2

FIG. 2

FIG. 11

EP 0 370 690 A2

FIG.5

25 26 13

16

15

FIG.6

26
25

FIG.7

26
25

FIG.9

29

F
F

FIG.8

16    14    26

17    15

FIG.10

31    29

32    30

EP 0 370 690 A2